# EUROPEAN PATENT SPECIFICATION

(11) **EP 2 686 130 B1**
(45) Date of publication and mention of the grant of the patent: **27.04.2016**
(21) Application number: 12713264.5
(22) Date of filing: 14.03.2012
(51) Int. Cl.: B23K 15/00, B23K 15/04, B23K 15/06, B23K 33/00, C22C 9/01

(54) **METHOD OF JOINING AN ALUMINIUM COMPONENT AND A HARD METAL, THE JOINT COMPRISING AN ALUMINIUM BRONZE TRANSITION PIECE WELDED TO THE ALUMINIUM COMPONENT**
VERFAHREN ZUM VERBINDEN EINER ALUMINIUMKOMPONENTE UND EINEM HARTMETALL MIT EINEM AN DIE ALUMINIUMKOMPONENTE GESCHWEISSTEN ALUMINIUM-BRONZE-ÜBERGANGSTEIL
PROCÉDÉ POUR RÉUNIR UN COMPOSANT EN ALUMINIUM ET UN MÉTAL DUR, LA JONCTION COMPRENANT UNE PIÈCE DE TRANSITION EN BRONZE D'ALUMINIUM SOUDÉE SUR LE COMPOSANT EN ALUMINIUM

(30) Priority: 14.03.2011 GB 201104302
(43) Date of publication of application: 22.01.2014
(73) Proprietor: Allectra Limited, Sheffield Park, Sussex TN22 3HQ (GB)
(72) Inventor: HOLMES, Michael James, Lewes, Sussex BN7 1HX (GB)
(74) Representative: Lord, Hilton David
(86) International application number: PCT/GB2012/050559
(87) International publication number: WO 2012/123740

(56) References cited:
- JP-A- 2002 283 080
- US-A- 3 119 632
- US-A- 4 939 338
- US-A- 5 836 623
- US-B1- 6 230 852
- DATABASE WPI Week 197801 Thomson Scientific, London, GB; AN 1978-00573A XP002677755, -& JP 52 059053 A (KANSAI METALICON KO) 16 May 1977 (1977-05-16)
- DATABASE WPI Week 201106 Thomson Scientific, London, GB; AN 2010-N15449 XP002677756, -& CN 101 831 572 A (ZHEJIANG HAILIANG CO LTD) 15 September 2010 (2010-09-15)

## Description

The present invention relates to a method of joining an aluminium component and a hard metal component according to the preamble of claim 1 (see, for example, US 5,836,623).

### Background of the Invention

In recent years, there has been considerable interest in using aluminium alternatives to stainless steel components in a range of industries. Aluminium has advantages that include being non-magnetic, lightweight and a good conductor of heat. In addition it can be formed by extrusion into complex shapes in a simple, low cost way which is not possible with steel. In high-vacuum industries, aluminium has further, potential value, as it does not outgas to the same extent as stainless steel and, therefore, requires less pumping to achieve suitable pressures.

It is well known that aluminium cannot easily form an acceptable, all metal, sealed joint with steel, either in welded connections or in certain, mechanically sealed connections. Consequently, because of the wide variety of proprietary equipment which is available in stainless steel and its widespread use for pipework and chambers, the application of aluminium has been restricted.

During direct welding of aluminium to stainless steel *via* standard methods, such as Tungsten Inert Gas (TIG) welding, laser welding or electron beam welding, intermetallic compounds are formed in the molten state. Upon solidification, the resulting alloys lead to structurally unstable areas that crack and leak, destroying the integrity of the seal. As such, joints produced by such a welding process have no practical application within an industrial setting.

Energy Research Journal 1 (2): 82-86, 2010 describes TIG welding together with self brazing. This technique is only suitable for plates, and is unsuitable for leak-tight welds. It is noteworthy that, at p. 85, there is discussion of "grain growth during welding". We have since established that this is associated with a lack of joint integrity.

Similarly, certain mechanically sealed joints between aluminium and steel are unable to form seals that are adequately secure. This is particularly so in the high vacuum industries, where exceptionally high levels of leak tightness and cleanliness are required from connections.

As well as joining pipework by direct welding, flange to flange bolted connections with metal gaskets are frequently used. In the field of High or Ultra High Vacuum (UHV), such flanges are defined by an ISO standard and are known as Conflat^{(R)} or CF types. The seal is created by trapping a copper gasket between two knife edges formed by the metal of the two work pieces being joined. As the fastening bolts are tightened, the knife edges cut into the softer copper, causing it to flow and thereby make a leak-tight seal. However, aluminium is too soft (Brinnell Hardness 22-34, Smithells Metals Reference Book, by Terry C. Totemeier, Colin James Smithells) and is unable to cut into a copper gasket, rendering it unsuitable for use in CF-type flanges within high vacuum systems.

Thus, within the high vacuum industry, direct aluminium connections with stainless steel cannot be made either through welding, or mechanically, these being the only two practical options available. There is a need, therefore, to be able to create secure, strong joints between aluminium and stainless steel, and there have been several attempts to address this problem in the art.

Friction welding is a solid-state technique for joining dissimilar metals. The process relies on heat generated though the friction when a stationary work piece is brought into contact with a rotating component, to cause the fusion of the two metals. No actual melting of the metals occurs. However the bonds formed by such a process are of low strength, and tend to come apart as the temperature is raised above room temperature. This technique has some specialised applications but has not found widespread acceptance.

For example, JP 1978-00573 discloses a method of joining different metals, such as stainless steel and aluminium, using friction welding, wherein at least one of the metals to be joined is sprayed with a film of aluminium bronze. The method is applicable to electronic parts, heat exchangers and chemical apparatus, but is not suitable for use in High Vacuum or Ultra-High Vacuum.

US 5,836,623 discloses a solution whereby a steel and aluminium are welded, but indirectly *via* a reaction inhibiting medium comprising a layer of niobium and a layer of lower temper aluminium than that being welded. Also disclosed are embodiments with alternative interlayers of copper and titanium. The authors apply this solution to connectors for use in ultra-high vacuum systems, and CF style flanges made by the disclosed techniques have been marketed. However, such products can only be made through a process which involves a technique referred to as 'explosion bonding'. This involves placing sheets of two dissimilar metals in contact, and packing them with plastic explosives. Detonation accelerates the components together under very high force, causing fusion of the metals. When successful, explosion bonding forms very strongly bonded materials. In tests of explosion bonded steel-aluminium products, the aluminium will fail before the bond does. However, this process has significant disadvantages. It is labour intensive, and has a high fail rate. Automation is not possible, and the resulting product is prohibitively expensive for widespread use in many industries. In addition, the violent, and somewhat unpredictable nature of explosion bonding limits the application to specific geometries of metals, for example sheets. It is unsuitable for bonding more delicate constructions, such as tubing. Furthermore, the bonding process has been known to induce structural weakness that may manifest during the service of the resulting flanges.

Nickel can be used as an intermediate metal when welding aluminium and stainless steel, but it is ferromagnetic and not readily available in a pure state. In addition, it is a soft metal, and, further, most commercial nickel is in the form of alloys whose welding properties have not been systematically investigated.

Thus, there remains demand for a product which solves the problem of the incompatibility of steel and aluminium in terms of welding and hardness, allowing both the formation of welded and mechanical joins between the two metals. Such a product should preferably be able to withstand extremes of positive and negative pressure, harsh chemical conditions, and/or cycling between extremes of temperature, especially those commonplace in the high vacuum industries.

It has now, surprisingly, been found that it is possible to form a secure join between aluminium and a hard metal, such as stainless steel, using an aluminium bronze alloy welded to the aluminium.

### Summary of the Invention

Thus the present invention provides a method of joining an aluminium component and a hard metal component according to claim 1, comprising welding an aluminium bronze alloy transition piece to the aluminium component and securing the transition piece to the hard metal component.

### Brief Description of the Figures

The invention will be illustrated further with reference to the accompanying drawings, in which:
Fig. 1 shows a NES 834 silicon aluminium bronze transition piece, centre, aluminium tube, and stainless steel tube, with the band between the aluminium and the flanged transition piece being the welded area;
Fig. 2 shows a NES834 silicon aluminium bronze transition piece, an aluminium tube, and a stainless steel tube;
Fig. 3 shows a diagrammatic representation of Fig. 1; and
Fig. 4 shows a diagrammatic representation of Fig. 2.

### Detailed Description of the Invention

The joins of the present invention are advantageous in that they can be made relatively easily and cheaply, and can be made sufficiently secure, strong, and leak-tight for use in the ultra high vacuum (UHV) industry. In addition, the methods of the invention can be automated.

The article of the present invention may be any article wherein it is desired to join aluminium and a hard metal. Such joins will typically be where a weld join or a CF flange join are desired, but the joins of the invention may be used in any article where a join between aluminium and a hard metal is required or desirable.

The aluminium component may be any grade of aluminium. The universally accepted grades of aluminium are 1XXX through 8XXX, inclusive. The preferred grades for use with the present invention are 3XXX, 4XXX, 5XXX, and 6XXX, which are generally considered to have good weldability characteristics.

The hard metal component may be formed of one or more hard metals, but preferably only one, where strength is a consideration, in order to avoid any lines of weakness. The hard metal may be a pure metal or an alloy, and the term includes, but is not limited to, titanium and alloys thereof, brass and other alloys of copper, alloys of nickel, and steels (Smithells metals reference book, *supra*). Preferred hard metals are the stainless steels. In particular the hard metal may be a steel, preferably stainless steel.

Stainless steel grades 1XXX through 9XXX are determined by their elemental make up, as follows:
- 1xxx: Carbon steels
- 2xxx: Nickel steels
- 3xxx: Nickel-chromium steels
- 4xxx: Molybdenum steels
- 5xxx: Chromium steels
- 6xxx: Chromium-vanadium steels
- 7xxx: Tungsten steels
- 8xxx: Nickel-chromium-vanadium steels
- 9xxx: Silicon-manganese steels

Stainless steels are also classified by their crystalline structure as follows:
Austenitic (300 series) stainless steels contain a maximum of 0.15% carbon, a minimum of 16% chromium and sufficient nickel and/or manganese to retain an austenitic structure at all temperatures from the cryogenic region to the melting point of the alloy. A composition of 18% chromium and 10% nickel is common.

Superaustenitic stainless steels, including AL-6XN and 254SMO, show great resistance to chloride pitting and crevice corrosion due to high molybdenum content (>6%) and nitrogen additions, and the higher nickel content ensures better resistance to stress-corrosion cracking compared to the 300 series. Low-carbon versions, such as 316L or 304L, are generally preferred for welding to avoid corrosion problems, and are particularly preferred for use in the present invention, especially 316L, which displays both corrosion resistance to aggressive gases, and has very low magnetic permeability.

Ferritic stainless steels have better engineering properties than austenitic grades, but have reduced corrosion resistance, owing to lower chromium and nickel content.

Martensitic stainless steels are not as corrosion-resistant as austenitic and ferritic stainless steels, but are extremely strong and tough, as well as highly machinable, and can be hardened by heat treatment These are not usually preferred for use in the present invention, as they have a tendency to magnetic, or magnetisable.

Precipitation-hardening martensitic stainless steels have corrosion resistance comparable to austenitic varieties, and can be precipitation hardened to even higher strengths than the other martensitic grades. The most common precipitation-hardened stainless steel is 17-4PH, and uses 17% chromium and 4% nickel.

Duplex stainless steels have a mixed microstructure of austenite and ferrite, in a ratio of between 50/50 mix and 40/60. These stainless steels have approximately twice the strength of austenitic stainless steels and have improved resistance to localised corrosion. Standard duplex stainless steel is 22% chromium, and S31803/S32205, commonly known as 2205, is the most widely used. Super duplex and hyper duplex stainless steels are also available. Duplex stainless steels have an overall lower alloy content than similar-performing super-austenitic grades, and are generally more cost-effective for less demanding applications.

Unless otherwise apparent from the context, reference herein to stainless steel, or its abbreviation, 'SS', includes reference to any suitable hard metal. It will also be appreciated that reference to aluminium includes reference to any suitable grade of aluminium.

By 'aluminium bronze alloy', also referred to herein simply as aluminium bronze, is meant any alloy of aluminium and copper comprising at least 50% w/w copper and at least 5% w/w aluminium, although 4% is acceptable in some aluminium bronzes. Preferred aluminium bronze alloys comprise between 79 and 96%, preferably no more than 95%, more preferably about 90% copper, and between 5 and 11%, more preferably 6% w/w aluminium. Other components may be any recognised in the art for aluminium bronzes, including manganese, sulphur, iron, zinc, arsenic and/or nickel in small quantities. A number of the more common aluminium bronzes are listed below:

**Table 1**

| Alloy | Aluminium | Iron | Nickel | Manganese | Zinc | Arsenic |
|---|---|---|---|---|---|---|
| CuAl₅ | 4.0% - 6.5% | 0.5% max | 0.8% max | 0.5% max | 0.5% max | 0.4% max |
| CuAl₈ | 7.0% - 9.0% | 0.5% max | 0.8% max | 0.5% max | 0.5% max | |
| CuAl₈Fe₃ | 6.5% - 8.5% | 1.5% - 3.5% | 1.0% max | 0.8% max | 0.5% max | |
| CuAl₉Mn₂ | 8.0% - 10.0% | 1.5% max | 0.8% max | 1.5% - 3.0% | 0.5% max | |
| CuAl₁₀Fe₃ | 8.5% - 11.0% | 2.0% - 4.0% | 1.0% max | 2.0% max | 0.5% max | |
| CuAl₁₀Fe₅Ni₅ | 8.5% - 11.5% | 2.0% - 6.0% | 4.0% - 6.0% | 2.0% max | 0.5% max | |

A preferred type of aluminium bronze comprises, in addition, silicon. Such alloys are referred to herein as silicon aluminium bronze alloys, or simply silicon aluminium bronzes.

A particularly preferred silicon aluminium bronze is NES834. The nominal composition of NES 834 is as shown below:

**Table 2**

| **Al** | **Mn** | **Si** | **Ni** | **Cu** | **Fe** | **%** |
|---|---|---|---|---|---|---|
| 6.0 | - | 2.0 | - | - | 0.5 | % |
| 6.4 | 0.5 | 2.4 | 0.1 | BAL | 0.7 | % |

Other aluminium bronzes include:

**Table 3**

| **Name** | **Alloy** | **Alt Name** | **Cu** | **Al** | **Fe** | **Si** | **Mn** | **Ni** |
|---|---|---|---|---|---|---|---|---|
| Silicon Aluminium Bronze | C64200 | CuAl₇Si₂ | 91.5 | 6.6 | 0 | 1.8 | | |
| Silicon Aluminium Bronze | NES834 | CuAl₆Si₂Fe | 90.9 | 6.2 | 0.6 | 2.2 | | |
| Albromet 200 | C95400 | CuAl₁₀Fe | 95 | 11 | 4 | 0 | | |
| Nickel Aluminium Bronze | C63200 | CAlO₄ | 81 | 9.1 | 3.9 | 0 | 1.6 | 4.4 |
| Hidurax | NES833 | | 82 | 9.3 | 4.2 | | | 4.2 |

The aluminium bronzes have various advantageous properties. They are very hard, having a Brinell Hardness in the range 150-200 (a typical stainless steel has a Brinell Hardness of 160). Further favourable characteristics of the aluminium bronzes include good machinability and exceptional corrosion resistance. The non-ferrous aluminium bronzes, in particular in those aluminium bronzes comprising silicon, are also completely, or substantially, non-magnetic. Particularly advantageously, these alloys have now been found to be able to form strong welds with both aluminium and stainless steel.

By 'transition piece' is meant an amount of the aluminium bronze alloy sufficient to be able to be welded to the aluminium component, typically to serve as a connector with a hard metal component. If the aluminium component is a length of tubing or pipe, then the transition piece may take the form of a ring or length of pipe or tube of similar cross-section, for example. However, it will be appreciated that there are no specific limits on the form that the transition piece should take, other than that it be weldable to the aluminium component and securable to the hard metal component.

In general, it is preferred to reduce the magnetic qualities of all pieces, a factor in selecting aluminium. This is a particular advantage of the aluminium bronzes, and especially the silicon aluminium bronzes.

Without being bound by theory, the transition piece effectively forms a bridge between the aluminium and the stainless steel, and can be welded to both, or just to the aluminium. In the former case, it is generally desirable first to weld the transition piece to one or other of the components before welding to the second, although this is not essential, and the welds may be effected to both components at once, especially in an automated procedure, for example.

The weld may be effected by any suitable means. Examples of suitable welding techniques include Tungsten Inert Gas (TIG) welding, electron beam welding and continuous wave (CW) laser welding. It has been found that electron beam welding is particularly suited for use in the present invention.

It is known that welds can fail, and the welds of the present invention are susceptible to low amounts of hydrocarbon contamination which can cause voids in the seal. Accordingly, it is particularly preferred to thoroughly clean the welding surfaces, by abrasion and/or an organic solvent, such as acetone, for example. It is particularly preferred that the welding surfaces mate closely. It is also preferred that the welding take place under a vacuum, in order to reduce the risk of contamination by environmental factors. It has also been found that conducting the welding under a vacuum has the advantage of reducing heat loss through convection. This is advantageous, as if the heat applied/created by the electron beam, or other source, is of too brief a duration, or the join is allowed to cool too rapidly, then an uneven or heterogeneous distribution of aluminium and copper can result. This heterogeneous effect is, or resembles, crystallisation, and the resulting weld will generally fail if this occurs.

Without being bound by theory, when aluminium is fused together with aluminium bronze during the welding process according to embodiments of the present invention, a liquid zone is formed which contains typically around 60% to 70% aluminium and 30% to 40% copper. Other elements including oxygen and silicon are also present in quantities typically less than 5%. Scanning electron microscopy coupled with secondary electron analysis (data not shown) reveals that the melt can solidify in two distinct ways.

The first solidification route appears to be a eutectic state which solidifies with a homogeneous microstructure without grain boundaries. The solidified mass has a uniform ratio of copper to aluminium atoms.

The second solidification route results in a heterogeneous solid with several different types of crystal structure and areas of high and low copper concentration. This solid exhibits pronounced grain boundaries and cavities resulting from solidification of copper rich volumes and copper poor volumes at different temperatures. The resulting solid has very poor mechanical strength, is not leak-tight, and frequently breaks apart as it cools under the force of differential contraction.

These two states appear to be distinct and, while no intermediate conditions have been observed, it is possible for the two states to exist side by side in one seal, if the heating or cooling was uneven.

Accordingly, it is preferred to use a lower intensity beam for longer durations, although higher intensity beams can be used, especially if the beam is not concentrated in a single spot, but moved around the weld. In the welding of a pipe, for example, the article can be rotated within the beam, or the beam can be rotated around the article, as desired. In any event, the skilled person will readily be able to determine the necessary parameters of heat, such as beam intensity and duration.

When the term 'beam' is used herein, it will be appreciated that reference is had to any suitable form of welding technique, unless otherwise apparent from the context.

Securing the transition piece to the stainless steel may be by any suitable method, including welding or by use of CF flanges. Where the transition piece is welded to the stainless steel, the requirements are not as strict as for welding to aluminium, although it is preferred that clean practice is observed, and conducting the welding in a vacuum is also preferred. However, welding to the stainless steel is less likely to be adversely affected by contamination or rapid heating/cooling, and electron beam welding may more readily be replaced with TIG welding, if desired.

In such an embodiment, the transition piece, or element, will be directly welded to the hard metal component through a different face to that welded to the aluminium component, thereby to form a continuous article, comprising an aluminium portion, an aluminium bronze portion and a hard metal portion, respectively. In one preferred embodiment, the resulting article is a tube having a continuous lumen, preferably of consistent internal diameter throughout.

When welded to the stainless steel component, the resulting article may take the form of a flattened disk or sheet, with the transition piece forming a layer between a layer of the hard metal and a layer of the aluminium, so that one face of the resulting, normally trilaminate, sheet is aluminium and the other is hard metal. The resulting disk or sheet may be used directly, such as to form an intermediary piece itself, for welding the appropriate face to aluminium or hard metal, or may be cut to measure.

In general, where a weld is to be made, it is preferred to form the mating pieces to fit closely, each with the other. In one configuration, the wall of one piece has a step configuration that mates with a matching step configuration of the wall of the mating piece. This has the advantage that the area to be welded substantially excludes air, or other atmosphere, but also serves to hold the two pieces in the exact configuration that is desired they adopt after welding.

When the join with the stainless steel component is not by welding, then it may take many forms, including, but not limited to, face-seal fittings, chamber mounted fittings, and flanges. In one embodiment, the stainless steel component may comprise a conduit terminating in a CF flange for connection to a CF flange formed by the transition piece. A leak-tight seal may then be formed by trapping a soft metal gasket, such as a copper gasket, between the two flanges, typically by drawing the flanges together through the use of bolts. Knife edges on the flanges press into the gasket, forming a leak-proof seal. As noted above, aluminium cannot be used in CF flanges, and this has been a major obstacle to using aluminium in the UHV industry. Now, using the transition piece of the present invention, and taking advantage of the hard metal character of the transition piece, it is possible to connect aluminium components to stainless steel components using CF flanges.

The transition pieces of the invention are useful and, accordingly, the present invention further provides a transition piece as described above. In the alternative, there is provided a transition piece for joining aluminium and a hard metal, said transition piece consisting of an aluminium bronze alloy, and being capable of forming a leak-tight seal to 10⁻⁹ mbar-litres/sec when welded to aluminium.

The present invention is useful in any field where it is desired to join aluminium and hard metals. Without being limited, the invention may be used in the following industries:
Aerospace - for example, satellite construction - weight is very important and aluminium is lighter than steel.
Automotive - for example, car air conditioning systems.
Cryogenic - for example, handling cooled liquids and gases.
Semi-conductor manufacturing plant - such as in X-Ray lithography.
Medical - for example, MRI scanners. Aluminium may be used for cryogenic vessels.
UHV (Ultra High Vacuum) machines, such as synchrotrons.

The present invention will now be illustrated further by reference to the following, non-limiting Examples.

### EXAMPLES

### Example 1

### CF Flange which is compatible with Aluminium

### Machining Tests

An alloy of SiAlBronze (C64200) was selected for tests. It machined easily and was suitable for forming into the shape of a CF flange with a knife edge. This type of flange is normally sealed with a copper gasket, which is compressed by the flange's knife edge. The alloy was hard enough to form a knife edge and seal against conventional SS CF flange.

### Welding Tests

The alloy SiAlBronze was welded to an aluminium tube, and the test pieces were visually inspected for cracks or irregularities, leak tested using a commercial helium leak detector and subjected to a mechanical strength test.

### Results

The welds were leak-tight and withstood a bending moment of 20 Nm.

### Example 2

### Direct welding of Stainless Steel (SS) tube to Aluminium (Al) tube using SiAlBronze as an intermediary

### Three alloys were chosen for tests

| | |
|---|---|
| Alloy A: | SiAlBronze type C64200 |
| Alloy B: | SiAlBronze type NES834 |
| Alloy C: | AlBronze, type Albromet |

Tubes as follows were used:

| | |
|---|---|
| SS | type 316L |
| Al | Aluminium type 5053-0 |

All the tubes were 19mm diameter and were prepared with a machined weld preparation.

Welding was by e-beam.

After welding, the test pieces were visually inspected, checked for leak tightness with a commercial High Vacuum Leak detector and subjected to mechanical strength tests. The welds were leak-tight and withstood a bending moment of 20 Nm.

### Example 3

### Tests on CF Flange Systems

Tests were performed to establish whether silicon aluminium bronze (SiAlBronze) can be welded to aluminium to form a high vacuum leak tight seal using the CF Knife edge flange system.

The selected alloy was C64200.

The aluminium tube chosen was grade 6082. This is a weldable alloy of Al which contains small quantities of magnesium and silicon. It is commonly used in pipework applications and is welded by Alternating Current (AC) Tungsten Inert Gas (TIG) welding. TIG welding is carried out in air. The process does not use any filler material.

### Electron-beam (e-beam) Wield Tests

Electron Beam (e-beam) welding uses a high voltage (60KV) beam of electrons to direct intense heat to a narrow (less than 1 mm) band of material. The process is carried out under a vacuum of less than 10⁻¹ mbar.

The conditions were: voltage 60KV, beam current 12.5mA, focus sample surface, speed of rotation of the workpiece 5 seconds per revolution.

The weld was visually inspected and appeared to be of good quality. The parts were leak checked using an Adixen Phoenix L300 Ultra High Vacuum (UHV) Leak Detector and were leak tight to better than 5 x 10⁻⁹ mbar-1/sec. This is satisfactory for UHV.

Simple mechanical tests were performed by inserting a bar into the clamped work piece and applying a downward force on the tube of approximately 100 N. This is equivalent to a bending moment of around 10 Nm. The weld was sound.

### UHV Seal tests.

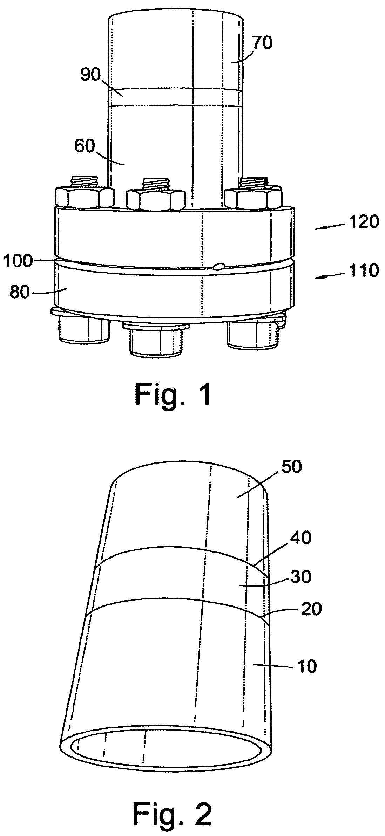

The face of the SiAlBronze flange was machined with the knife edge and bolt hole detail of a conventional stainless steel CF flange (illustrated in Fig. 1).

The SiAlBronze flange was coupled with a conventional copper gasket to a standard stainless steel flange. The assembly was leak tested to 5 x 10⁻⁹ mbar-1/sec and was found to be leak tight. This demonstrated the possibility of mounting by welding a CF compatible flange to an aluminium vessel. This allows industry standard CF flanged components of many types to be coupled using the conventional UHV sealing processes and all metal pipework to Aluminium Vacuum Vessels.

### Second Series of Tests

The objective of these tests was to demonstrate the practicality of an all-metal welded seal joint between Stainless Steel and Aluminium pipes or tubes using an intermediate alloy.

For these tests the following tubes were used
1 Stainless Steel grade 316L, this has good weldability and corrosion resistance and is in widespread use in, for instance, the Semiconductor Manufacturing industry.
2 Aluminium Tube grade 5053-0. This is a machinable and weldable grade of aluminium which contains 2% Magnesium.
3 SiAlBronze type C64200
4 SiAlBronze type NES834
5 Albromet alloy CuAl₁₀Fe

As before, the welds were sound, leak tight, and resisted a force of 10 Nm.

### Example 4

Tests were performed on various starting materials, and the results are shown below.

Leak test consists of a measurement with a Helium Leak Detector with sensitivity to 5 x 10⁻⁹mbar-litres/sec.

Mechanical test consists of application of a bending moment of approximately 20Nm.

**Table 4**

| METHOD | MATERIAL 1 | MATERIAL 2 | OUTCOME | LEAK TIGHT | MECHANICAL |
|---|---|---|---|---|---|
| E-BEAM | SiAlBronze C64200 | Al - 6082 | GOOD | YES | GOOD |
| TIG | AlBronze CuAl10Fe | SS 316L | GOOD | YES | GOOD |
| TIG | AlBronze CuAl10Fe | SS 316L | GOOD | YES | GOOD |
| TIG | AlBronze CuAl10Fe | SS 316L | GOOD | YES | GOOD |

Samples were tubes of 316L SS, Alloy, Aluminium 5053 - all 19mm as drawings
Samples cleaned with acetone
Method of welding used was e-bream
All welds to stainless steel (SS) were satisfactory.

**Table 5**

| ALLOY | Al grade | OUTCOME | LEAK TIGHT | MECHANICAL |
|---|---|---|---|---|
| C64200 | 5053-0 | GOOD | YES | GOOD |
| C64200 | 5053-0 | GOOD | YES | GOOD |
| NES834 | 5053-0 | GOOD | YES | GOOD |
| NES834 | 5053-0 | GOOD | YES | GOOD |
| CuA110Fe | 5053-0 | GOOD | YES | GOOD |
| CuA110Fe | 5053-0 | GOOD | YES | GOOD |

### WELD TESTS

### High Temperature and Cryogenic Temperature Tests of Aluminium to Silicon Aluminium Bronze Welds

10 samples were prepared:
Aluminium Tube, 1.2mm wall thickness, Material 5053-0 (2% Mg)
Silicon Aluminium Bronze -material NES834 (6%Al, 2% Si, 0.5% Fe) [NES834 ~C64200~ C64210~ EN-Nr. CW302G, CuAl₇Si₂]
Machined as a stud with a cylindrical weld preparation. 1.7mm wall with 0.5mm recess, 2mm high.

### Summary

Samples were cleaned to Ultra High Vacuum (UHV) standard.
4 samples were used to establish optimum electron beam conditions on the e-beam welding machines.
6 samples were returned with apparently sound welds and helium leak tight (<5x 10⁻¹⁰ mbar 1/s He)
1 sample was cut through the weld for observation.

The five remaining samples were subjected to a Dye Penetration Test. Two samples were found to have microscopic cracks not visible to the naked eye. Both of these samples failed in further testing.

The remaining three Test Pieces were subjected to:
1 Bake to 150°C,
2 Bake to 200°C,
3 Immersion in liquid nitrogen at -196°C.

All three Test Pieces were helium leak tight after each of the temperature tests.

### Magnetism

No magnetism could be measured in the samples (µ=1.000)

### Conclusions

Sound welds remain sound over temperatures ranging from at least -200°C to at least +200°C.

Welds are non-magnetic.

### Test Details

Parts are rated from 0 to 4
0: Colour middle of weld area is grey, matt,
1: colour like 0, area between bronze and weld is sharper
2: silver shiny middle of weld area, quite broad darker area to bronze
3: like 2, but dark area is more structured and not as well defined
4: matt shiny middle of weld area
All but 3) show a small flaring at the aluminium to weld area

### Dye Penetration examination on the 5 parts

Parts were dipped in colour, cleaned, dried and then powder spray was added.

Result:
0: no cracks
1: no cracks
2: lots of cracks, going from Bronze to Al. Most cracks are on the bronze to weld area interface. Min 6 long cracks and 8 short ones
3: cracks mainly at the bronze to weld interface. About 8 off
4: one very small dot visible (bronze to weld interface)

### Heating of parts, 110°C max.

results:
0:< 8x10⁻¹⁰ mbar-1/sec leak tight
1:< 8x10⁻¹⁰ mbar-1/sec leak tight
2:< 8x10⁻¹⁰ mbar-1/sec leak tight
3: Leak ~ 5x 10⁻⁸ mbar-1/sec
4: <8x10⁻¹⁰ mbar-1/sec leak tight

### Heating parts to 150°C max

results:
0:< 5x10⁻¹⁰ mbar-1/see - leak tight
1:< 5x10⁻¹⁰ mbar-1/sec -leak tight
2: leak ~5x 10⁻⁷ mbar-1/sec.
3: leak ~ 5x 10⁻⁷ mbar-1/sec.
4: < 1.2 x 10⁻¹² mbar-1/sec - leak tight
Both samples with cracks were removed from the test

The bronze had changed colour, now more grey.

### Heating parts to 200°C max

results:
0:< 1,2 x10⁻¹⁰ mbar-1/sec leak tight
1:< 4.4 x 10⁻¹⁰ mbar-1/sec leak tight
4: < 4 x 10⁻¹⁰ mbar-1/sec leak tight

Significant colour change on bronze, green - blue, close to weld area it stayed the original colour

Results for heat tests: sound welds remain sound, up to 200°C no leaks appeared.

Bronze is similar to Stainless Steel and has expansion of ~16.5 x 10⁻⁶ per unit K, Aluminium 5056 has ~24.1, Aluminium 6061 ~23.6, giving a mismatch of ~7 x 10⁻⁶. Example: 100mm will have a mismatch of approx 0.13mm between Al and Bronze at 200°C.

### Cryogenic Tests

Parts 0, 1 and 4 were immersed in liquid nitrogen for 30 minutes, removed, allowed to warm up to room temperature, and tested with a helium leak detector

results:
0:< 3.0 x 10⁻¹⁰ mbar-1/sec leak tight
1:< 4.4 x 10⁻¹⁰ mbar-1/sec leak tight
4: < 4.0 x 10⁻¹⁰ mbar-1/sec leak tight

The above tests show that welds of the invention can be cycled through temperatures from as low as -200°C or lower up to +200°C or higher, and maintain their integrity, over a temperature range of at least 400°C.

In the accompanying Figures:
Fig. 1 shows a NES 834 silicon aluminium bronze transition piece (60), an aluminium tube (70), and stainless steel tube (80), with the band (90) between the aluminium and the flanged transition piece being the welded area. A stainless steel CF flange (110) is sealed with a copper gasket located at (100) to a CF style flange (120) made from SiA1 Bronze. This in turn is welded to a short length of A1 pipe (70). This shows that SiAlBronze can be used to form a CF style flange and that it can be successfully welded to aluminium;
Fig. 2 shows a NES834 silicon aluminium bronze transition piece (30), an aluminium tube (10), and a stainless steel tube (50). Aluminium tube (10) is welded to stainless steel tube *(50) via* an NES834 silicon aluminium bronze connecting piece (30). The welds are shown at (20, 40). This is a 19mm transition tube made by e-beam welding. The assembly is leak tight to High Vacuum standards and passed a mechanical strength test. Bi-metal tubes of this type for joining A1 to SS have not been available commercially, and have not been described in the art;

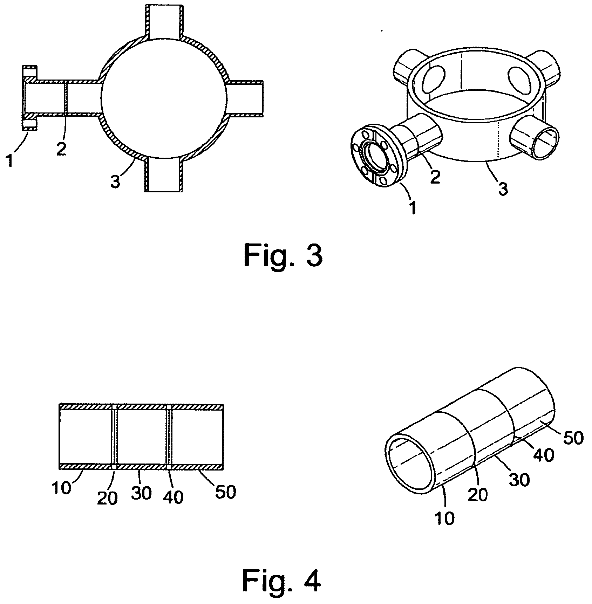

Fig. 3 shows a diagrammatic representation of an arm of the structure shown in Fig. 1;

### KEY:

1 -CF flange fabricated from SiAlBronze,
2-E-beam weld,
3- Aluminium High Vacuum Chamber

Fig. 4 shows a diagrammatic representation of Fig. 2;

### KEY:

10- Al pipe,
20- E-beam weld,
30- SiAlBronze union,
40- E-beam weld,
50- Stainless Steel tube

## Claims

1. A method for joining an aluminium component (70, 10) and a hard metal component (80, 50), said hard metal being capable of forming a CF-type flange, said method being **characterised in that** it comprises welding an aluminium bronze alloy transition piece (60, 30) to the aluminium component (70, 10) and securing the transition piece (60, 30) to the hard metal component (80, 50), wherein the welding method produces a liquid zone.

2. A method according to claim 2, wherein the aluminium is grade 3XXX, 4XXX, 5XXX, or 6XXX.

3. A method according to claim 1 or 2, wherein the hard metal is stainless steel.

4. A method according to claim 3, wherein the stainless steel is 316L.

5. A method according to any preceding claim, wherein the aluminium bronze alloy is an alloy of aluminium and copper comprising at least 50% w/w copper and at least 5% w/w aluminium.

6. A method according to claim 5, wherein the aluminium bronze alloy comprises between 79 and 96% copper.

7. A method according to claim 5 or 6, wherein the aluminium bronze alloy comprises between 5 and 11% aluminium.

8. A method according to any preceding claim, wherein the aluminium bronze alloy is a silicon aluminium bronze alloy.

9. A method according to claim 8, wherein the silicon aluminium bronze alloy is NES834.

10. A method according to any of claims 1 to 9, wherein the welding method used to join the transition piece (60, 30) to the aluminium component (70, 10) is electron beam welding or continuous wave (CW) laser welding.

11. A method according to claim 10, wherein the welding is conducted under a vacuum of 10⁻¹ mbar or lower.

12. A method according to any preceding claim, wherein the transition piece (60, 30) is secured to the stainless steel component (80, 50) by welding.

13. A method according to claim 12, wherein the welding method used is TIG welding.

14. A method according to any preceding claim, wherein an article is formed by joining said aluminium component (70, 10) and said hard metal component (80, 50), said article being a tube having a continuous lumen.

15. A method according to claim 14, wherein the lumen is of consistent internal diameter throughout.

## Patentansprüche

1. Verfahren zum Verbinden einer Aluminiumkomponente (70, 10) und einer Hartmetallkomponente (80, 50), wobei das Hartmetall in der Lage ist, einen CF-Flansch zu bilden, wobei das Verfahren **dadurch gekennzeichnet** wird, dass es die folgenden Schritte aufweist: Schweißen eines Übergangsteils (60, 30) aus einer Aluminium-Bronze-Legierung an die Aluminiumkomponente (70, 10); und Sichern des Übergangsteils (60, 30) an der Hartmetallkomponente (80, 50), wobei das Schweißverfahren eine flüssige Zone erzeugt.

2. Verfahren nach Anspruch 1, bei dem das Aluminium von der Güteklasse 3XXX, 4XXX, 5XXX oder 6XXX ist.

3. Verfahren nach Anspruch 1 oder 2, bei dem das Hartmetall nichtrostender Stahl ist.

4. Verfahren nach Anspruch 3, bei dem der nichtrostende Stahl 316L ist.

5. Verfahren nach einem der vorhergehenden Ansprüche, bei dem die Aluminium-Bronze-Legierung eine Legierung aus Aluminium und Kupfer ist, die mindestens 50 Gew.-% Kupfer und mindestens 5 Gew.-% Aluminium aufweist.

6. Verfahren nach Anspruch 5, bei dem die Aluminium-Bronze-Legierung zwischen 79 und 96 % Kupfer aufweist.

7. Verfahren nach Anspruch 5 oder 6, bei dem die Aluminium-Bronze-Legierung zwischen 5 und 11 % Aluminium aufweist.

8. Verfahren nach einem der vorhergehenden Ansprüche, bei dem die Aluminium-Bronze-Legierung eine Silizium-Aluminium-Bronze-Legierung ist.

9. Verfahren nach Anspruch 8, bei dem die Silizium-Aluminium-Bronze-Legierung NES834 ist.

10. Verfahren nach einem der Ansprüche 1 bis 9, bei dem das Schweißverfahren, das zur Anwendung gebracht wird, um das Übergangsteil (60, 30) mit der Aluminiumkomponente (70, 10) zu verbinden, ein Elektronenstrahlschweißen oder ein Dauerstrichlaserschweißen ist.

11. Verfahren nach Anspruch 10, bei dem das Schweißen unter einem Vakuum von 10⁻¹ mBar oder niedriger durchgeführt wird.

12. Verfahren nach einem der vorhergehenden Ansprüche, bei dem das Übergangsteil (60, 30) an der Komponente (80, 50) aus nichtrostendem Stahl mittels Schweißen gesichert wird.

13. Verfahren nach Anspruch 12, bei dem das Schweißverfahren das WIG-Schweißen ist.

14. Verfahren nach einem der vorhergehenden Ansprüche, bei dem ein Artikel durch Verbinden der Aluminiumkomponente (70, 10) und der Hartmetallkomponente (80, 50) hergestellt wird, wobei der Artikel ein Rohr mit einem kontinuierlichen Hohlraum ist.

15. Verfahren nach Anspruch 14, bei dem der Hohlraum einen übereinstimmenden Innendurchmesser durchgängig aufweist.

## Revendications

1. Procédé de liaison d'un composant en aluminium (70) et d'un composant en métal dur (80, 50), ledit métal dur étant capable de former une bride de type CF, ledit procédé étant **caractérisé en ce qu'**il comprend le soudage d'une pièce de transition en alliage de bronze d'aluminium (60, 30) sur le composant en aluminium (70, 10) et la fixation de la pièce de transition (60, 30) sur le composant en métal dur (80, 50), dans lequel le procédé de soudage produit une zone liquide.

2. Procédé selon la revendication 1, dans lequel l'aluminium est de grade 3XXX, 4XXX, 5XXX ou 6XXX.

3. Procédé selon les revendications 1 ou 2, dans lequel le métal dur est de l'acier inoxydable.

4. Procédé selon la revendication 3, dans lequel l'acier inoxydable est du 316L.

5. Procédé selon l'une quelconque des revendications précédentes, dans lequel l'alliage de bronze d'aluminium est un alliage d'aluminium et de cuivre comprenant au moins 50% en poids de cuivre et au moins 5% en poids d'aluminium.

6. Procédé selon la revendication 5, dans lequel l'alliage de bronze d'aluminium comprend entre 79 et 96% de cuivre.

7. Procédé selon les revendications 5 ou 6, dans lequel l'alliage de bronze et d'aluminium comprend entre 5 et 11% d'aluminium.

8. Procédé selon l'une quelconque des revendications précédentes, dans lequel l'alliage de bronze et d'aluminium est un alliage de bronze, d'aluminium et de silicium.

9. Procédé selon la revendication 8, dans lequel l'alliage de bronze, d'aluminium et de silicium est du NES834.

10. Procédé selon l'une quelconque des revendications 1 à 9, dans lequel le procédé de soudage utilisé pour relier la pièce de transition (60, 30) au composant en aluminium (70, 10) est un soudage par faisceau d'électrons ou un soudage par laser à onde continue (CW).

11. Procédé selon la revendication 10, dans lequel le soudage est effectué en présence d'un vide de 10⁻¹ mbar ou moins.

12. Procédé selon l'une quelconque des revendications précédentes, dans lequel la pièce de transition (60, 30) est fixée sur le composant en acier inoxydable (80, 50) par soudage.

13. Procédé selon la revendication 12, dans lequel le procédé de soudage utilisé est un soudage par procédé TIG.

14. Procédé selon l'une quelconque des revendications précédentes, dans lequel un article est formé en reliant ledit composant en aluminium (70, 10) et ledit composant en métal dur (80, 50), ledit article étant un tube comportant une lumière continue.

15. Procédé selon la revendication 14, dans lequel la lumière a un diamètre intérieur global compatible.
